# EUROPÄISCHE PATENTSCHRIFT

(11) **EP 2 881 273 B1**
(45) Veröffentlichungstag und Bekanntmachung des Hinweises auf die Patenterteilung: **14.11.2018**
(21) Anmeldenummer: 14191054.7
(22) Anmeldetag: 30.10.2014
(51) Int. Cl.: B60H 1/34, F24F 13/078

(54) **BELEUCHTBARES LUFTLEITELEMENT**
AIR GUIDING ELEMENT WHICH CAN BE ILLUMINATED
ÉLÉMENT DE CONDUCTION D'AIR POUVANT ÊTRE ÉCLAIRÉ

(30) Priorität: 09.12.2013 DE 202013105590 U
(43) Veröffentlichungstag der Anmeldung: 10.06.2015
(73) Patentinhaber: Dr. Schneider Kunststoffwerke GmbH, 96317 Kronach (DE); VOLKSWAGEN AG, 38440 Wolfsburg (DE)
(72) Erfinder: Uhlenbusch, Olaf, 96275 Marktzeuln (DE)
(74) Vertreter: Pröll, Jürgen

(56) Entgegenhaltungen:
- JP-A- 2001 180 252
- JP-A- 2010 100 111
- JP-A- 2010 137 816
- JP-A- 2010 143 338

## Beschreibung

Die vorliegende Erfindung betrifft ein Luftleitelement für einen Luftausströmer, der ein Gehäuse, eine Luftaustrittsöffnung und einen Anschluss an einen Luftzuführschacht aufweist, wobei und das Luftleitelement über mindestens einen Lagerzapfen in dem Gehäuse verschwenkbar gelagert ist und einen aus durchleuchtbarem Kunststoff bestehenden Lichtleiter aufweist.

Es ist bereits bekannt, Luftleitelemente (sogenannte Lamellen) zumindest bereichsweise zu beleuchten. Hierzu ist vorgeschlagen worden, Leuchtmittel in die Lamelle zu integrieren oder Leuchtmittel hinter mindestens einer Lamelle anzuordnen.

DE 39 09 645 C2 offenbart eine Stellvorrichtung in einer Heizungs- oder Lüftungsanlage in Kraftfahrzeugen, bei der ein verschiebbares Betätigungselement einen lichtleitenden Kern aufweist, der lichtleitende Platten an einer Seite übergreift, so dass an der Austrittsstirnseite Licht in das Schiebeelement eintreten und durch einen Austrittsspalt austreten kann.

DE 28 14 627 C2 offenbart eine Innenleuchte für Kraftfahrzeuge mit einer Lichtquelle in einer Wandöffnung des Fahrgastraumes mit einer Blende, die die Wandöffnung überdeckt und das Licht der Lichtquelle in einen unteren Bereich des Fahrgastraumes lenkt. Die Blende besteht aus mehreren übereinander liegenden und zum Fahrgastraum hin geneigten Lamellen, die in einer Austrittsöffnung in einer Luftdüse angeordnet sind. Auf der der Lichtquelle zugewandten Unterseite sind die geneigten Lamellen verspiegelt. Zentrisch im Luftzuführungskanal ist hinter der Anordnung der Lamellen eine Lichtquelle, beispielsweise eine Glühlampe, angeordnet. Die Oberseite der Lamellen ist vorzugsweise lichtabsorbierend beschichtet, so dass das Licht ausschließlich über die Lamellen und deren Unterseiten abgelenkt in den Fahrgastraum auszutreten vermag. Durch die Anordnung im Luftkanal wird eine Überhitzung der Glühlampe vermieden.

DE 10 2006 011 125 A1 offenbart einen Luftausströmer, insbesondere für ein Kraftfahrzeug, der auch bei schwachem Umgebungslicht eine visuelle Einschätzung des Betriebszustandes erlaubt. Zu diesem Zweck ist mindestens ein Bauelement des Luftausströmers zumindest teilweise aus einem lichtleitfähigen Material gebildet, dem Licht zuführbar ist.

Aus der DE 10 2010 036 691 A1 ist eine Luftdüse zur Führung eines Luftstromes aus einem Luftzuführkanal oder aus einer Luftzuführleitung in Heizungs'-, Lüftungs- oder Klimaanlagen, insbesondere für Fahrgasträume in Kraftfahrzeugen, bekannt, die aus einem Gehäuse besteht, das in einem Wanddurchbruch einsetzbar oder hinter diesem befestigbar ist und vorderseitige Luftausströmer aufweist. Der Luftausströmer ist ein verschwenkbarer Einsatz, der den Luftstrom entsprechend der eingestellten Richtung ablenkt. In dem Einsatz oder rückseitig an dem Einsatz sind schmale Rippen oder Stege quer zur Längsrichtung des Einsatzes verlaufend vorgesehen, die einen Halter tragen, an dem mindestens ein Leuchtelement abgestützt ist, das die Düse ausleuchtet.

Aus der DE 201 18 014 U1 ist eine Luftdüse für den Auslass eines Luftstromes aus einem Luftzuführschacht, aufweisend ein Gehäuse mit einer vorderen Luftdurchtrittsöffnung und ortsfesten oder um Achsen verschwenkbar im Gehäuse, insbesondere in Gehäusewänden gelagerten Horizontal- und/oder Vertikallamellen bekannt, wobei mindestens eine Lamelle aus lichtdurchflutbarem Kunststoff besteht und von Licht durchflutet ist. Der Kunststoff ist derart eingefärbt und/oder die Oberfläche der Lamellen derart beschichtet, dass das Licht aus einem mindestens an der vorderen Schmalseite vorgesehenen Lichtaustrittsabschnitt austritt und das Licht von einer im oder am Gehäuse vorgesehenen Lichtquelle über mindestens eine Anbindungs- oder Lagerungsfläche am Gehäuse, vorzugsweise über die horizontalen oder vertikalen Lagerbolzen der jeweiligen Achsen, in den Kunststoffkörper der Lamellen eindringt.

Weiterhin ist aus der JP 2010 137816 A ein Luftleitelement nach dem Oberbegriff der unabhängigen Ansprüche 1 und 2 bekannt. Neben dem komplexen und vor allem störungsanfälligen Aufbau dieser Vorrichtungen aus dem Stand der Technik weisen Lamellen mit lichtdurchflutbaren Elementen den Nachteil auf, dass das Licht nicht homogen beispielsweise über eine Längskante der Lamelle nach vorne ausgegeben wird. Aufgabe der vorliegenden Erfindung ist es daher, ein Luftleitelement für einen Luftausströmer mit einem aus durchleuchtbaren Kunststoff bestehenden Lichtleiter anzugeben, bei dem eine gleichmäßige Lichtausgabe über den gesamten Bereich, der beleuchtet werden soll, bereitgestellt wird.

Die Aufgabe wird durch ein Luftleitelement mit den in den Ansprüchen 1 und 2 angegebenen technischen Merkmalen gelöst. Vorteilhafte Weiterbildungen der Erfindung sind in den Unteransprüchen im Detail angegeben.

Ein erfindungsgemäßes Luftleitelement für einen Luftausströmer, wobei der Luftausströmer ein Gehäuse, eine Luftaustrittsöffnung und einen Anschluss an einen Luftzuführschacht aufweist und das Luftleitelement über mindestens einen Lagerzapfen verschwenkbar gelagert ist, weist einen aus durchleuchtbarem Kunststoff bestehenden ersten Lichtleiter auf, der einen in dem Gehäuse des Luftausströmers verschwenkbar gelagerten Lagerzapfen aufweist, wobei in dem Gehäuse an dem Lagerzapfen ein Leuchtmittel zum Einbringen von Licht in den ersten Lichtleiter angeordnet ist und der erste Lichtleiter sich über mindestens einen Längsbereich des Luftleitelementes erstreckt. Über das Leuchtmittel eingebrachtes Licht wird über eine Lichtaustrittsfläche eines parallel zu einer vorderen, der Luftaustrittsöffnung zugewandten Längskante des Luftleitelementes verlaufenden ersten Lichtaustrittsabschnitts ausgegeben und der erste Lichtleiter weist an der der Lichtaustrittsfläche des ersten Lichtaustrittsabschnitts gegenüberliegenden Seite eine Oberflächenstruktur auf, die eine Reflexion des eingebrachten Lichtes bewirkt und so ausgebildet ist, dass über das Leuchtmittel in den ersten Lichtleiter eingebrachtes Licht gleichmäßig über die Lichtaustrittsfläche des ersten Lichtaustrittsabschnitts ausgegeben wird, wobei sich die Oberflächenstruktur mindestens über den Bereich der Lichtaustrittsfläche des ersten Lichtaustrittsabschnitts erstreckt.

Ein derartig ausgebildetes Luftleitelement kann über einen breiten Bereich des ersten Lichtaustrittsabschnitts beleuchtet werden, ohne dass Bereiche entlang der Lichtaustrittsfläche des Lichtaustrittsabschnitts stärker beleuchtet werden als andere ("Hotspots").

Gegenüber dem Stand der Technik erfolgt eine gleichmäßige Beleuchtung der Lichtaustrittsfläche des ersten Lichtaustrittsabschnitts über deren gesamte Breite und Länge. Dies wird durch die spezielle Oberflächenstruktur des ersten Lichtleiters erreicht. Glatte Oberflächen, wie aus dem Stand der Technik bekannt, bewirken zwar auch eine Reflexion des Lichtes, führen aber auch dazu, dass es zu einer inhomogenen Ausleuchtung bzw. Beleuchtung eines Lichtaustrittsabschnitts bzw. einer Lichtaustrittsfläche kommt. Insbesondere ist der erste Lichtleiter im Bereich der Oberflächenstruktur so ausgebildet, dass die Seite bzw. der Teil des ersten Lichtleiters mit der Oberflächenstruktur schräg verläuft. Schräg verlaufend bedeutet in diesem Zusammenhang, dass die Seite mit der Oberflächenstruktur und die Seite (Lichtaustrittsfläche) des ersten Lichtleiters mit dem ersten Lichtaustrittsabschnitt an einem hinteren Ende (dem Lagerzapfen abgewandt) zusammenlaufen und der Abstand der Seite mit der Oberflächenstruktur mit abnehmenden Abstand zum Lagerzapfen zunimmt. Diese Oberflächenstruktur erstreckt sich zumindest über den Bereich der Lichtaustrittsfläche des ersten Lichtaustrittsabschnitts. Der erste Lichtleiter ist so ausgebildet, dass, ausgehend von dem Lagerzapfen, der Lichtleiter (ebenso wie der Lagerzapfen) rund ausgebildet ist oder, ausgehend von einem runden Lagerzapfen, einen rechteckigen Querschnitt aufweist. Der rechteckige Querschnitt erstreckt sich zumindest bis zu dem Abschnitt, ab dem die Oberflächenstruktur beginnt. Der erste Lichtaustrittsabschnitt befindet sich an dem Bereich des ersten Lichtleiters, über welchen Licht ausgegeben werden soll. Die abnehmende Breite durch die Schräge im Bereich der Oberflächenstruktur kann sich entweder nur über einen bestimmten Abschnitt des Lichtleiters erstrecken oder im Wesentlichen, ausgehend von dem Lagerzapfen, den gesamten ersten Lichtleiter umfassen.

Die Oberflächenstruktur ist ferner so ausgebildet, dass sich im Wesentlichen geradlinig entlang des ersten Lichtleiters erstreckende Lichtstrahlen derart abgelenkt werden, dass die Lichtaustrittsfläche des ersten Lichtaustrittsabschnitts gleichmäßig beleuchtet wird bzw. ausgeleuchtet wird.

Der erste Lichtleiter kann im Bereich der Oberflächenstruktur, ausgehend von dem Lagerzapfen, eine abnehmende Breite aufweisen.

Vor der Lichtaustrittsfläche des ersten Lichtaustrittsabschnitts kann ein Diffusor angeordnet sein und der erste Lichtleiter und der Diffusor können von mindestens einem ersten Gehäuseteil für das Luftleitelement umgeben sein und das mindestens eine erste Gehäuseteil mindestens eine längliche Öffnung aufweisen, die mindestens einen Teil des Diffusors von außen freigibt. Die Anordnung des Diffusors vor der Lichtaustrittsfläche des ersten Lichtaustrittsabschnitts bezieht sich auf die Luftaustrittsöffnung des Luftausströmers. Hierbei ergibt sich ein Aufbau ausgehend von der Luftaustrittsöffnung in Richtung des Luftzuführschachtes mit einem Diffusor, einem ersten Lichtaustrittsabschnitt und anschließend des Lichtleiters mit der Oberflächenstruktur. Der Diffusor dient dazu, den Blick auf die dahinter liegende Oberflächenstruktur des ersten Lichtleiters zu verhindern und das aus der Lichtaustrittsfläche des ersten Lichtaustrittsabschnitts austretende Licht zu homogenisieren ("weiches Licht"). Ferner kann der Diffusor eingefärbt sein, so dass entsprechende Farbeffekte erzielt werden können. Über die Ausgestaltung (Höhe, Breite und Form) der länglichen Öffnung wird festgelegt, wie der beleuchtete Teil des Luftleitelements aussieht.

Aufgabe des Diffusors ist die diffuse Lichtstreuung. Mittels spezieller lichtstreuender Partikel wird das Licht auf dem Weg durch den Diffusor extrahiert und die Oberfläche leuchtet gleichmäßig. Das lichtleitende Material verteilt das Licht gleichmäßig und sorgt für eine hohe Lichtausbeute.

Die Lichtaustrittsfläche des ersten Lichtaustrittsabschnitts kann eine glatte Oberfläche und die Oberfläche einen rechteckigen Querschnitt aufweisen, wobei der Diffusor eine glatte, an der Lichtaustrittsfläche des ersten Lichtaustrittsabschnitts anliegende Oberfläche aufweist. Eine solche Ausgestaltung, insbesondere im Hinblick auf eine glatte Oberfläche und auch auf eine rechteckige Oberfläche, bewirkt keine ungewollten Reflexionen oder Spiegelungen, die das Beleuchten des Luftleitelementes benachteiligen würden.

Der erste Lichtleiter kann bis auf den Lagerzapfen beabstandet zu dem mindestens einen ersten Gehäuseteil des Luftleitelementes angeordnet sein. Die beabstandete Anordnung stellt sicher, dass die gewünschte Reflexion erreicht wird.

Der Grad der Reflexion durch die Oberflächenstruktur kann je nach Anwendungsfall variieren. In besonders bevorzugten Ausführungsformen wird jedoch eine Totalreflexion durch die Oberflächenstruktur bevorzugt, so dass es zu einer verbesserten und gleichmäßigen Beleuchtung kommt.

Der Diffusor kann an dem ersten Gehäuseteil angespritzt sein. Der Diffusor dient im Wesentlichen dazu, das aus der Lichtaustrittsfläche des ersten Lichtaustrittsabschnitts austretende Licht derart auszugeben, dass ein gleichmäßig und "weich" ausgeleuchteter Bereich erzeugt wird. Aus diesem Grund ist es nicht notwendig, dass ein Abstand zwischen dem Diffusor und dem ersten Lichtaustrittsabschnitt bzw. der Lichtaustrittsfläche besteht.

Das Luftleitelement weist mindestens ein abschnittsweise entlang des Luftleitelementes verschiebbares Verstellmittel auf. Derartige Verstellmittel dienen zum Einstellen der Richtung von ausströmender Luft bei Luftausströmern und steuern sowohl die Richtung der ausströmenden Luft in horizontaler als auch in vertikaler Richtung durch das Verschwenken von entsprechenden Horizontal- und Vertikallamellen.

Darüber hinaus sind weitere Luftausströmer bekannt, die anstelle von vertikalen und horizontalen Lamellen Luftleitelemente aufweisen, die sternförmig in einem runden Luftausströmergehäuse verschwenkbar gelagert sind. Auch hierfür kann eine Beleuchtung beispielsweise der vorderen Kanten der Luftleitelemente oder eines mittleren Bereichs, der die Luftleitelemente verbindet, mit den hierin beschriebenen Mitteln erfolgen.

Das mindestens eine Gehäuseteil des Luftleitelementes kann im Verschiebebereich des Verstellmittels eine längliche Öffnung aufweisen und die Lichtaustrittsfläche des ersten Lichtaustrittsabschnitts des ersten Lichtleiters sich im Wesentlichen über die Länge und Breite der länglichen Öffnung erstrecken. In derartigen Ausführungen kann eine Beleuchtung nur über das Verstellmittel oder über das Luftleitelement und das Verstellmittel erfolgen. Werden sowohl das Verstellmittel als auch mindestens ein Abschnitt entlang der Längskante eines das Verstellmittel aufweisenden Luftleitelements beleuchtet, so sind hierzu mindestens zwei längliche Öffnungen oder eine längliche Öffnung vorgesehen. Entweder erstreckt sich eine längliche Öffnung über die Breite des Verschiebewegs des Verstellmittels oder es ist neben einer länglichen Öffnung für das Verstellmittel eine weitere längliche Öffnung vorgesehen. Die Lichtaustrittsfläche des ersten Lichtaustrittsabschnitts des ersten Lichtleiters bringt über die mindestens eine längliche Öffnung Licht nach außen (über die Längskante des Luftleitelements) bzw. in das Verstellmittel ein.

Das Verstellmittel weist ein Verstellmittelgehäuse auf, in dem ein zweiter Lichtleiter aus einem durchleuchtbaren Kunststoff angeordnet ist, der ein Anschlussteil mit einer glatten Kontaktfläche aufweist, die an der Lichtaustrittsfläche des ersten Lichtaustrittsabschnitts des ersten Lichtleiters anliegt, wobei die Kontaktfläche über das Verstellmittel entlang des ersten Lichtaustrittsabschnitts verschiebbar ist. Aus der Lichtaustrittsfläche des ersten Lichtaustrittsabschnitts austretendes Licht gelangt direkt über die Kontaktfläche des Anschlussteils in den zweiten Lichtleiter. Insbesondere bestehen der erste und der zweite Lichtleiter aus den gleichen Materialien, so dass keine ungewünschte Lichtbrechung, Ablenkung oder Minderung der Lichtstärke auftritt.

Der zweite Lichtleiter kann ausgehend von dem Anschlussteil zu beiden Seiten jeweils eine erste Schräge aufweisen und die erste Schräge in einen im Wesentlichen rechtwinklig zur Kontaktfläche verlaufenden Abschnitt oder in einen Abschnitt mit einer zweiten Schräge übergehen, wobei die rechtwinklig zur Kontaktfläche verlaufenden Abschnitte oder die Abschnitte mit der zweiten Schräge in einen vorderen zweiten Lichtaustrittsabschnitt übergehen. Über den zweiten Lichtaustrittsabschnitt wird insbesondere das Verstellmittel beleuchtet. Das über den zweiten Lichtaustrittsabschnitt ausgegebene Licht gelangt über die Kontaktfläche des zweiten Lichtleiters, die entlang der Lichtaustrittsfläche des ersten Lichtaustrittsabschnitts verschoben werden kann, in den zweiten Lichtleiter.

Der zweite Lichtaustrittsabschnitt kann im Wesentlichen parallel zur Kontaktfläche verlaufen oder eine konvexe Krümmung aufweisen. Je nach Ausgestaltung der ersten und/oder zweiten Schräge sowie der Ausgestaltung des Verstellmittels ist der zweite Lichtaustrittsabschnitt entsprechend anzupassen.

Die Kontaktfläche des Anschlussteils kann einen rechteckigen Querschnitt aufweisen. Ein rechteckiger Querschnitt kann insbesondere im Hinblick auf eine Reflexion einfach zur Bestimmung der Reflexion und Ablenkung der eingehenden Lichtstrahlen verwendet werden.

Der zweite Lichtleiter kann eine im Wesentlichen dreieckige Öffnung aufweisen, deren Basis parallel und beabstandet zu der Kontaktfläche verläuft. Die dreieckige Öffnung bewirkt eine Ablenkung der über die Kontaktfläche des Anschlussteils eintreffenden Lichtstrahlen mindestens auf die Seiten des zweiten Lichtleiters mit der ersten Schräge. Von den Schrägen wird das Licht wiederum abgelenkt und gelangt zu dem zweiten Lichtaustrittsabschnitt. Insbesondere kann die dreieckige Öffnung im Wesentlichen ein gleichschenkliges Dreieck bilden. Die Größe der dreieckigen Öffnung ist in Abhängigkeit der Breite des zweiten Lichtleiters sowie der Kontaktfläche und weiterer Parameter (Abmaße) zu bestimmen, welche im Zusammenhang mit der Beleuchtung stehen.

Die erste und/oder die zweite Schräge können eine Oberflächenstruktur aufweisen, die eine Reflexion des über das Anschlussteil eingebrachten Lichts bewirken und so ausgebildet sind, dass das in den zweiten Lichtleiter eingebrachte Licht im Wesentlichen gleichmäßig über den zweiten Lichtaustrittsabschnitt ausgegeben wird. Die Oberflächenstruktur des zweiten Lichtleiters entspricht im Wesentlichen der Oberflächenstruktur des ersten Lichtleiters, wobei jedoch die einzelnen strukturellen Elemente, welche die Reflexion der Lichtstrahlen bewirken, so angepasst sind, dass die von der dreieckigen Öffnung abgelenkten Lichtstrahlen über die Oberflächenstruktur des zweiten Lichtleiters (erste Schräge und/oder zweite Schräge) gleichmäßig über die gesamte Länge und Breite des zweiten Lichtaustrittsabschnitts ausgegeben werden.

Die Oberflächenstruktur des ersten Lichtleiters und/oder die Oberflächenstruktur des zweiten Lichtleiters können hierbei aus einer Vielzahl von Dreiecken bestehen. Die Dreiecke sind so ausgebildet und angeordnet, dass in Abhängigkeit der vorstehend bereits erwähnten Parameter (Länge der Lichtaustrittsabschnitte, Länge der Lichtaustrittsfläche, Abmaße des Luftleitelementes, des Verstellmittels etc.) eine entsprechende Lichtablenkung und Beleuchtung erfolgen.

Alternativ können die Oberflächenstruktur des ersten Lichtleiters und/oder die Oberflächenstruktur des zweiten Lichtleiters durch dreieckige Verläufe oder durch wellenförmige Verläufe gebildet sein. Wellenförmige Verläufe und dreieckige Verläufe können regelmäßig oder unregelmäßig ausgebildet sein. Die entsprechenden Verläufe der Oberflächen bewirken, dass Lichtstrahlen durch die entsprechend ausgeformten Oberflächen in einem bestimmten Winkel reflektiert werden, so dass die gewünschte Ausleuchtung bzw. Beleuchtung der Lichtaustrittsfläche des ersten Lichtaustrittsabschnitts und des zweiten Lichtaustrittsabschnitts erfolgt.

An dem zweiten Lichtaustrittsabschnitt kann ein Diffusor angeordnet sein, der in dem Verstellmittelgehäuse angeordnet ist und das Verstellmittelgehäuse kann mindestens eine längliche Öffnung aufweisen, die mindestens einen Teil des Diffusors von außen freigibt. Der an dem zweiten Lichtaustrittsabschnitt angeordnete Diffusor erfüllt im Wesentlichen den gleichen Zweck wie der an der Lichtaustrittsfläche des ersten Lichtaustrittsabschnitts angeordnete Diffusor. Die längliche Öffnung des Verstellmittelgehäuses (und analog dazu die längliche Öffnung des mindestens einen Gehäuseteils des Luftleitelementes) kann auch dadurch gebildet werden, dass das mindestens eine erste Gehäuseteil (mit eingesetztem Diffusor) lackiert wird und anschließend die Bereiche des Diffusors von dem Lack befreit werden (z. B. mittels Laser), die Licht ausgeben sollen. Analog dazu können auch Bereiche des Diffusors mit einer Schicht überzogen werden, welche beim Lackieren die entsprechenden Bereiche freihält. Andererseits ist es auch möglich, einen partiell galvanisierbaren Kunststoff einzusetzen oder den Diffusor mittels einer PVD(Physical Vapour Deposition)-Schicht zu beschichten und in einem nächsten Arbeitsgang diese Schicht teilweise wieder freizulegen (z.B. mittels Laser).

Das mindestens eine erste Gehäuseteil des Luftleitelementes kann auch ein hohles Gehäuseteil mit seitlichen Öffnungen sein, wobei an der vorderen, der Luftaustrittsöffnung zugewandten Längskante des Luftleitelementes mindestens eine längliche Öffnung verläuft. Die Bestandteile des Luftleitelementes (erster Lichtleiter mit Lagerzapfen und erstem Lichtaustrittsabschnitt) können so in mindestens eine Öffnung seitlich eingeschoben werden. Weitere Komponenten, wie beispielsweise ein zweiter Lagerzapfen (der nicht beleuchtet wird), können über eine gegenüberliegende Öffnung eingesetzt werden, wodurch sich auf einfache Art und Weise ein beleuchtetes Lichtleitelement herstellen lässt. Der erste Lichtleiter kann nach dem Einschieben in die Öffnung entweder so bewegt werden, dass die Lichtaustrittsfläche des ersten Lichtaustrittsabschnitts in die mindestens eine längliche Öffnung des Gehäuseteils ragt oder es wird in die gegenüberliegende Öffnung eine Leiste eingeschoben, die eine entsprechende korrespondierende Form aufweist, wobei beim Einschieben der Leiste der Bereich des ersten Lichtleiters mit der Oberflächenstruktur nach vorne in Richtung der länglichen Öffnung gedrückt wird, so dass die Lichtaustrittsfläche des ersten Lichtaustrittsabschnitts durch die Leiste in oder an die längliche Öffnung gedrückt wird.

Der zweite Lichtleiter ist innerhalb des Verstellmittelgehäuses von einem (lichtabschottenden) Halteteil gehalten, wobei der zweite Lichtleiter mindestens an einer oberen und/oder unteren Oberfläche Vorsprünge aufweist, welche in entsprechende Aufnahmen des Halteteils greifen, wobei die Vorsprünge in den Übergängen zu dem zweiten Lichtleiter Radien aufweisen. Die Radien dienen dazu, störende Reflexionen zu vermeiden.

Weiterhin kann ein zweites Gehäuseteil mit dem mindestens einen ersten Gehäuseteil verbunden sein, wobei das mindestens eine erste Gehäuseteil und das zweite Gehäuseteil mindestens an den Bereichen, welche an dem ersten Lichtleiter anliegen oder dem ersten Lichtleiter zugewandt sind, eine weiße Oberfläche oder ein weißes Reflektorteil aufweisen. Alternativ dazu können das erste und/oder das zweite Gehäuseteil auch aus einem weißen Material gefertigt sein, wobei anschließend die äußere Hülle des Luftleitelementes, gebildet durch die Außenflächen des ersten und zweiten Gehäuseteils, in der entsprechenden Farbe lackiert oder anderweitig gefärbt wird. Entsprechend kann auch ein einzelnes hohles Gehäuseteil derart ausgestaltet sein.

Die weißen Oberflächen oder das weiße Reflektorteil bewirken eine verbesserte Lichtausbeute, indem das über das Leuchtmittel in den ersten Lichtleiter eingebrachte Licht an den weißen Oberflächen zusätzlich reflektiert werden kann, aber zumindest nicht beispielsweise durch dunkle Oberflächen unkontrolliert reflektiert oder absorbiert wird.

Darüber hinaus kann das Verstellmittelgehäuse und/oder das Halteteil mindestens an den Bereichen, welche an dem zweiten Lichtleiter anliegen oder dem zweiten Lichtleiter zugewandt sind, eine weiße Oberfläche oder ein weißes Reflektorteil aufweisen. Insbesondere ist das Halteteil ein weißes Reflektorteil. Wie vorstehend bereits für den ersten Lichtleiter angeführt, bewirkt eine Ausgestaltung des Verstellmittelgehäuses und/oder des Halteteils bzw. des Reflektorteils mit weißen Oberflächen eine verbesserte Lichtausbeute gegenüber anderweitig gefärbten Oberflächen.

Der erste Lichtleiter und/oder der zweite Lichtleiter können aus Polycarbonat (PC) oder Polymethylmethacrylat (PMMA) bestehen. Ferner sind auch andere Kunststoffe verwendbar. Insbesondere sind der erste Lichtleiter und/oder der zweite Lichtleiter derart auszuwählen, dass diese eine möglichst verlustfreie Lichtleitung bewirken.

Das mindestens eine erste Gehäuseteil und/oder das zweite Gehäuseteil können aus glasfaserverstärktem Kunststoff bestehen. Glasfaserverstärkte Kunststoffe weisen auch bei geringen Querschnitten (beispielsweise im Vergleich zu Vollprofillamellen) eine entsprechende Festigkeit auf.

Ein besonders geeigneter glasfaserverstärkter Kunststoff für ein Luftleitelement ist Polyamid 6 mit einem 50%igen Glasfaseranteil (PA 6 GF50).

Der Diffusor des ersten Lichtleiters und/oder der Diffusor des zweiten Lichtleiters können aus Polycarbonat (PC) oder Polymethylmethacrylat (PMMA) bestehen. Der Diffusor des ersten Lichtleiters und/oder der Diffusor des zweiten Lichtleiters sind insbesondere als "milchiger" Kunststoff auszuführen, so dass der Diffusor nicht als Linse oder Spiegel sowie Reflektorteil dient, sondern möglichst gleichmäßig beleuchtet werden kann.

Das mindestens eine erste Gehäuseteil und das zweite Gehäuseteil können miteinander verklebt, über eine Steckverbindung oder durch Laserschweißen miteinander verbunden sein.

Das Leuchtmittel kann eine lichtemittierende Diode sein. Insbesondere eignen sich lichtemittierende Dioden (LEDs), welche so ausgebildet sind, dass sie Licht in verschiedenen Farben emittieren können.

Der erste Diffusor und/oder der zweite Diffusor können mit einer Lackierung überzogen sein und können mindestens partiell einen Lichtaustrittsbereich aufweisen, der durch Freilegung mittels Laser gebildet ist.

Weitere Ziele, Merkmale, Vorteile und Anwendungsmöglichkeiten ergeben sich aus der nachfolgenden Beschreibung mit Bezug auf die zugehörigen Zeichnungen.

Die in den Figuren dargestellten Ausführungsbeispiele sind nicht maßstäblich und können bei zu implementierenden Ausführungsformen vom Veranschaulichten abweichen.

In den Zeichnungen zeigen:
- Fig. 1: eine Explosionsansicht eines Luftleitelements und eines Verstellmittels in einer ersten Ausführungsform;
- Fig. 2: eine perspektivische Ansicht eines Luftleitelements und eines Verstellmittels der ersten Ausführungsform;
- Fig. 3: eine Explosionsansicht eines Luftleitelements und eines Verstellmittels in einer zweiten Ausführungsform;
- Fig. 4: eine perspektivische Ansicht eines Luftausströmers;
- Fig. 5: eine Seitenansicht eines Luftausströmers;
- Fig. 6: eine weitere Seitenansicht eines Luftausströmers;
- Fig. 7: eine Draufsicht auf einen Luftausströmer;
- Fig. 8: eine Schnittansicht entlang der Linie A-A von Figur 7;
- Fig. 9: eine Schnittansicht entlang der Linie B-B von Figur 10;
- Fig. 10: eine Draufsicht auf einen Luftausströmer;
- Fig. 11: eine Schnittansicht entlang der Linie C-C von Figur 12; und
- Fig. 12: eine Draufsicht auf einen Luftausströmer.

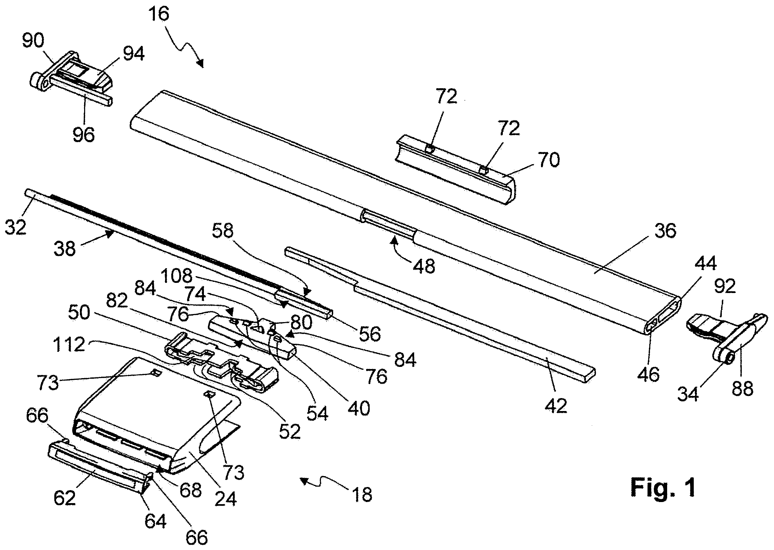

Die in den Fig. 1 bis 12 mit den gleichen Bezugszeichen versehenen Teile entsprechen in ihrer Funktion und Ausgestaltung im Wesentlichen einander, solange nichts anderes angegeben ist.

Darüber hinaus wird darauf verzichtet, Bestandteile eines Luftausströmers sowie andere Einrichtungen darzustellen und zu erläutern, sofern sie nicht erforderlich zum Verständnis der hier offenbarten technischen Lehre sind.

Fig. 1 zeigt eine Explosionsansicht eines Luftleitelements 16 und eines Verstellmittels 18 in einer ersten Ausführungsform. Das Luftleitelement 16 weist ein hohles Gehäuseteil 36 auf, das als Lamelle eines Luftausströmers dient und entsprechend ausgebildet ist. An einer vorderen Kante bzw. einem vorderen Bereich weist das Luftleitelement 16 eine längliche Öffnung 48 auf. Das Luftleitelement 16 weist ferner seitliche Öffnungen 44 und 46 auf. Über die Öffnungen 44 und 46 (auf beiden Seiten des Luftleitelements 16) werden die Lagerteile 88 und 90 sowie ein erster Lichtleiter 38 und eine Leiste 42 eingesetzt.

In die Öffnungen 44 werden Lagervorsprünge 92 und 94 der Lagerteile 88 und 90 eingesetzt. Das Lagerteil 88 weist zudem einen Lagerzapfen 34 auf, der in einer entsprechenden Öffnung 35 (in Fig. 1 nicht dargestellt) eines Luftausströmers aufgenommen wird. Das Lagerteil 90 weist einen Lagervorsprung 94 auf, der in eine korrespondierende Öffnung 44 (in Fig. 1 nicht dargestellt) eingesetzt wird. Zudem weist das Lagerteil 90 eine Leiste 96 auf, die dazu dient, den ersten Lichtleiter 38 in Position zu halten. Die Leiste 96 wird in eine der Öffnung 46 gegenüberliegende Öffnung eingesetzt. Bei dem Zusammenbau des Luftleitelements 16 wird zuerst der Lichtleiter 38 in eine der Öffnung 46 gegenüberliegende Öffnung soweit eingeschoben, bis ein erster Lichtaustrittsabschnitt 56 des ersten Lichtleiters 38 sich im Bereich der länglichen Öffnung 48 befindet. Damit der erste Lichtaustrittsabschnitt 56 in Position zu der länglichen Öffnung 48 oder in der länglichen Öffnung 48 verbleibt, wird in die Öffnung 46 des Gehäuseteils 36 des Luftleitelements 16 eine Leiste 42 eingeschoben, die so ausgebildet ist, dass zumindest Bereiche des ersten Lichtleiters 38 (insbesondere Abschnitt mit Oberflächenstruktur 58) an korrespondierend ausgeformten Bereichen der Leiste 42 anliegen. Nach dem Einsetzen des ersten Lichtleiters 38 und der Leiste 42 werden die Lagerteile 88 und 90 über die Lagervorsprünge 92 und 94 in die Öffnungen 44 eingesetzt. Der erste Lichtleiter 38 weist einen Lagerzapfen 32 auf, der durch eine entsprechende Öffnung eines Lagerungsbolzens oder Lagerungshülse des Lagerteils 90 hindurchgeht. Im eingesetzten Zustand des Lagerteils 90 ragt der Lagerzapfen 32 aus dieser Hülse hervor. Der Lagerzapfen 32 kann auch bündig mit der Hülse abschließen oder in dieser Hülse aufgenommen sein. Ferner wird der erste Lichtleiter 38 über die Leiste 96 in Position gehalten.

Nach dem Einsetzen des ersten Lichtleiters 38, der Leiste 42 sowie der Lagerteile 88 und 90 steht aus dem Gehäuseteil 36 über die längliche Öffnung 48 eine Lichtaustrittsfläche 108 des ersten Lichtaustrittsabschnitts 56 hervor bzw. ist die Lichtaustrittsfläche 108 des ersten Lichtaustrittsabschnitts 56 im Bereich der länglichen Öffnung 48 aufgenommen.

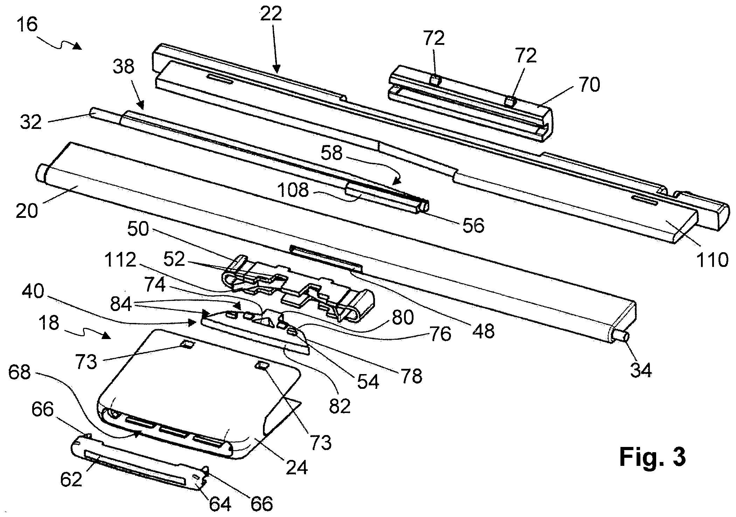

Ein zweiter Lichtleiter 40, der eine wie in Fig. 1 dargestellte Ausgestaltung mit einem zweiten Lichtaustrittsabschnitt 42, ersten Schrägen 76 sowie einem Anschlussteil 80 aufweist, wird über an der Oberseite und an der Unterseite des zweiten Lichtleiters 40 angeordnete Vorsprünge 54 in einem entsprechend ausgebildeten Halteteil 50 mit korrespondierenden Aufnahmen 52 für die Vorsprünge 54 aufgenommen. Das Halteteil 50 weist zudem Oberflächen 112 (in Fig. 1 nicht bezeichnet; vgl. Fig. 3) auf, welche zumindest den ersten Schrägen 76 als Anlagefläche dienen. Die ersten Schrägen 76 weisen eine Oberflächenstruktur 84 auf, die zur Ablenkung von Lichtstrahlen in einem bestimmten Maß ausgebildet ist. Ferner weist der zweite Lichtleiter 40 eine dreieckige Öffnung 74 auf. Das Anschlussteil 80 liegt mit einer Kontaktfläche im zusammengesetzten Zustand an der Lichtaustrittsfläche 108 des Lichtaustrittsabschnitts 56 an. Aufgabe der dreieckigen Öffnung 74 ist es, Licht nach links und rechts "aufzufächern", so dass es nicht in der Mitte zu einem "Hotspot" kommt (ungleichmäßige Beleuchtung).

Das Halteteil 50 mit dem darin aufgenommenen zweiten Lichtleiter 40 wird in einem Verstellmittelgehäuse 24 des Verstellmittels 18 aufgenommen, wobei zusätzlich eine Aufnahme 64 in eine längliche Öffnung 68 des Verstellmittelgehäuses 24 eingesetzt wird. Die Aufnahme 64 weist in einem vorderen Abschnitt einen Diffusor 62 auf. Die Aufnahme 64 wird über Haken 66 und entsprechend ausgebildete Vorsprünge oder Öffnungen innerhalb des Verstellmittelgehäuses 24 gehalten.

Das zusammengesetzte Verstellmittel 18 wird dann auf das Gehäuse 36 des Luftleitelements 16 aufgesetzt, wobei das Verstellmittelgehäuse 24 so ausgeformt ist, dass eine obere und untere Seite des Verstellmittelgehäuses 24 das Gehäuse 36 des Luftleitelements 16 umgreifen. Über ein Teil 70 wird das Verstellmittel 18 an dem Luftleitelement 16 fixiert. Dazu werde Vorsprünge 72 in die Öffnungen 73 gebracht, wobei auch auf der unteren Seite des Teils 70 sowie des Verstellmittelgehäuses 24 entsprechende Vorsprünge 72 und Öffnungen 73 vorgesehen sind. Das Verbinden des Teils 70 mit dem Verstellmittelgehäuse 24 erfolgt durch ein "Verclipsen".

Im zusammengebauten Zustand liegt die Kontaktfläche des Anschlussteils 80 an der Lichtaustrittsfläche 108 des ersten Lichtaustrittsabschnitts 56 an. Die seitlichen Flächen des Anschlussteils 80 liegen beim Verschieben entlang der Lichtaustrittsfläche 108 in den Endstellungen des Verschiebewegs an den Bereichen des Gehäuseteils 36 an, die die längliche Öffnung 48 begrenzen. Dadurch ist ein Verschieben des Verstellmittels 18 über einen vorgebbaren Verschiebeweg (definiert durch die längliche Öffnung 48) hinaus nicht möglich.

Der erste Lichtleiter 38 und der zweite Lichtleiter 40 bestehen aus einem durchleuchtbaren Material (bspw. PC oder PMMA), so dass über den Lagerzapfen 32 beispielsweise von einer LED eingebrachtes Licht geradlinig entlang des ersten Lichtleiters 38 verläuft. Die Lichtstrahlen werden dann an der Seite des ersten Lichtleiters 38 mit der Oberflächenstruktur 58 so (um ca. 90° umgelenkt) reflektiert, dass eine gleichmäßige Beleuchtung der Lichtaustrittsfläche 108 des ersten Lichtaustrittsabschnitts 56 erfolgt. Die Oberfläche der Lichtaustrittsfläche 108 ist glatt ausgebildet und die Kontaktfläche des Anschlussteils 80, welche direkt an der Oberfläche der Lichtaustrittsfläche 108 anliegt, ist ebenso glatt ausgebildet. Dadurch ergibt sich beim Einritt der Lichtstrahlen aus dem ersten Lichtaustrittsabschnitt 56 in den zweiten Lichtleiter 40 keine Ablenkung oder Spiegelung von Lichtstrahlen. Die in das Anschlussteil 80 eintretenden Lichtstrahlen werden über die dreieckige Öffnung 74 in Richtung zu den ersten Schrägen 76 umgelenkt. Die ersten Schrägen 76 (und auch die zweiten Schrägen 78; Fig. 3) sind durch einen Lichtschott im Halteteil 50 so abgeschirmt, das kein Fehllicht in Richtung der Lamelle austreten kann. Die Oberflächen der Seiten mit der ersten Schräge 76 weisen ebenfalls eine Oberflächenstruktur 84 auf, die eine Reflexion der über die Oberflächen der dreieckigen Öffnung 74 abgelenkten Lichtstrahlen bewirkt. Die Lichtstrahlen werden dann über den zweiten Lichtaustrittsabschnitt 82 ausgegeben, wobei der zweite Lichtaustrittsabschnitt 82 gleichmäßig beleuchtet wird. Die Länge der Lichtaustrittsfläche 108 sowie der Lichteintrittsfläche des Anschlussteils 80 korrespondieren derart miteinander, das bei einer Verschiebung des Verstellmittels 18 stets eine Überdeckung vorhanden ist. Dadurch ist sichergestellt, dass das Verstellmittel 18 in all seinen Stellungen gleich intensiv leuchtet.

Die Vorsprünge 54 weisen in ihrem Übergang zu der Oberfläche des zweiten Lichtleiters 40 Radien auf, so dass die Vorsprünge 54 keine zusätzlichen Reflexionen oder ungewünschte Lichtbrechungen hervorrufen.

Der zweite Lichtaustrittsabschnitt 82 liegt direkt an dem Diffusor 62 an, der dazu dient, den Blick auf die dahinter liegenden Teile (zweiter Lichtleiter 40 mit Oberflächenstrukturen 84) zu verhindern und eine homogene und trübe Beleuchtung bereitzustellen, wobei der Diffusor 62 vorzugsweise aus einem "milchigen" Kunststoff besteht. Die an dem ersten Lichtleiter 38 und an dem zweiten Lichtleiter 40 anliegenden Oberflächen sind vorzugsweise weiß ausgebildet, so dass eine verbesserte Reflexion erreicht wird. Ferner können die Oberflächen, die dem ersten Lichtleiter 38 und dem zweiten Lichtleiter 40 zugewandt sind, beabstandet zu dem ersten Lichtleiter 38 und dem zweiten Lichtleiter 40 angeordnet sein.

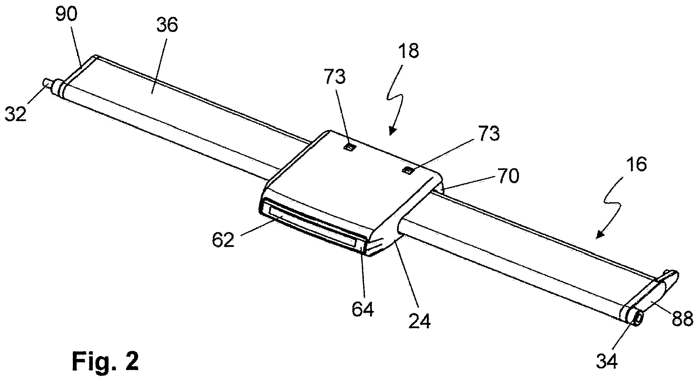

Fig. 2 zeigt eine perspektivische Ansicht des Luftleitelements 16 und des Verstellmittels 18 der ersten Ausführungsform im zusammengebauten Zustand. Wie aus Fig. 2 ersichtlich, liegen im zusammengebauten Zustand die Lagerteile 88 und 90 an den Seiten des Gehäuses 36 des Luftleitelements 16 an. Ferner ragt der Lagerzapfen 32 aus der Lagerhülse des Lagerteils 90, wobei in anderen Ausführungsformen der Lagerzapfen 32 bündig mit der Lagerhülse abschließt oder in der Lagerhülse aufgenommen sein kann, und das Verstellmittel 18 ist über das Verstellmittelgehäuse 24 und das Teil 70 fest auf dem Gehäuse 36 des Luftleitelements 16 angebracht. Wird über den Lagerzapfen 32 Licht eingebracht, so wird das Verstellmittel über den Bereich mit dem Diffusor 62 beleuchtet. Bei einem Verschieben des Verstellmittels 18 erfolgt eine gleich bleibende Beleuchtung des Diffusors 62, da die Kontaktfläche des Anschlussteils 80 entlang der Lichtaustrittsfläche 108 des ersten Lichtaustrittsabschnitts 56 verschoben wird. Die Beleuchtung des Diffusors 62 wird hierbei nicht beeinträchtigt.

Fig. 3 zeigt eine Explosionsansicht eines Luftleitelements 16 und eines Verstellmittels 18 in einer zweiten Ausführungsform. Im Gegensatz zu der in Fig. 1 dargestellten ersten Ausführungsform (Lamelle mit Hohlkammern, extrudiert aus Kunststoff oder Aluminium) besteht das Luftleitelement 16 aus einem ersten Gehäuseteil 20 und einem zweiten Gehäuseteil 22. Darüber hinaus ist der zweite Lichtleiter 40 so ausgebildet, dass er neben einer ersten Schräge 76 zu beiden Seiten des Anschlussteils 80 eine zweite Schräge 78 aufweist. Sowohl die ersten Schrägen 76 als auch die zweiten Schrägen 78 weisen eine Oberflächenstruktur 84 auf, die eine entsprechende Reflexion von über die Kontaktfläche des Anschlussteils 80 und über die dreieckige Öffnung 74 des.zweiten Lichtleiters 40 umgelenkten Lichtstrahlen bewirkt. Hierbei sollten die Flächen der dreieckigen Öffnung 74 vorzugsweise im Spritzgusswerkzeug poliert sein.

Darüber hinaus sind in Fig. 3 die Oberflächen 112 (in Fig. 3 nur eine Oberfläche bezeichnet) des Halteteils 50 dargestellt, die den Seiten mit der Oberflächenstruktur 84 des zweiten Lichtleiters 40 gegenüberliegen. Diese Oberflächen 112 (die auch als Lichtschott dienen) sind ebenso wie die Flächen der in Fig. 1 dargestellten Ausführungsform und die Flächen der in Fig. 3 dargestellten Ausführungsform, die dem ersten Lichtleiter 38 und dem zweiten Lichtleiter 40 gegenüberliegen, weiß ausgebildet. Hierbei können weiße Kunststoffe verwendet werden, welche anschließend an ihrer äußeren Oberfläche eingefärbt werden, oder diese Oberflächen erhalten eine weiße Oberflächenbeschichtung (beispielsweise mittels Färben) oder es werden weiße Einlegeteile verwendet.

Ein zusätzlicher Unterschied zwischen der in Fig. 1 und der in Fig. 3 dargestellten Ausführungsform besteht in dem ersten Gehäuseteil 20, welches ebenfalls im Wesentlichen hohl ausgebildet ist, jedoch die Seiten geschlossen sind. Das erste Gehäuseteil 20 weist einen Lagerzapfen 34 auf, der in eine entsprechende Öffnung 35 (in Fig. 3 nicht dargestellt) eines Luftausströmergehäuses eingesetzt werden kann. An der gegenüberliegenden Seite weist das erste Gehäuseteil 20 eine Lagerhülse auf, durch welche ein Lagerzapfen 32 des ersten Lichtleiters 38 hindurchgeführt wird. Der erste Lichtleiter 38 wird so in das erste Gehäuseteil 20 eingesetzt, dass sich die Lichtaustrittsfläche 108 des ersten Lichtaustrittsabschnitts 56 im Bereich der länglichen Öffnung 48 befindet. Anschließend wird das zweite Gehäuseteil 22 von hinten in die Öffnung des erste Gehäuseteils 20 eingeschoben, wobei das zweite Gehäuseteil 22 eine Leiste 110 aufweist, die entsprechend der Form des ersten Lichtleiters 38 ausgebildet und an diese angepasst ist. Wie in Fig. 3 angedeutet, kann eine Verbindung durch "Verclipsen" erfolgen, wobei vorstehende Rastmittel in entsprechende Aufnahmen eingebracht werden (Rastmittel entweder am ersten Gehäuseteil 20 oder am zweiten Gehäuseteil 22 und entsprechend Aufnahmen am anderen Gehäuseteil). Bei dem in Fig. 3 dargestellten Ausführungsbeispiel wird ferner der Verschiebeweg des Verstellmittels 18 über die Ausbuchtung an der Rückseite des zweiten Gehäuseteils 22 festgelegt. Das Teil 70, welches mit dem Verstellmittelgehäuse 24 verbunden wird, kann daher nur um ein bestimmtes Maß verschoben werden, bis die Seitenflächen des Teils 70 an den korrespondierenden Seitenflächen des hinteren Teils des zweiten Gehäuseteils 22 anliegen. Ferner weist das zweite Gehäuseteil 22 einen Einschnitt auf, in dem ein Zapfen gelagert ist, über den eine Koppelstange mit weiteren parallel verlaufenden Luftleitelementen verbindbar ist.

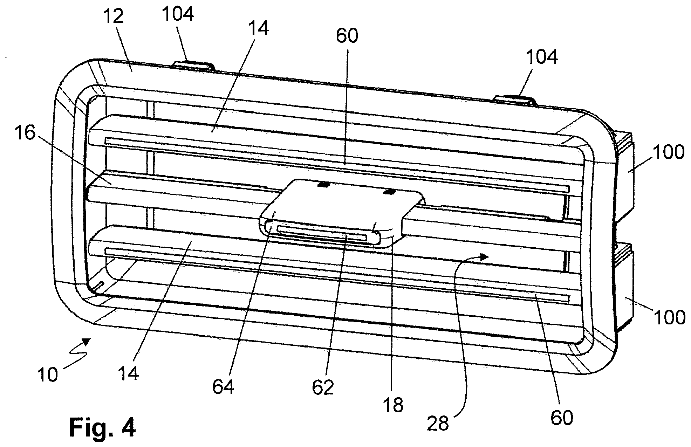

Fig. 4 zeigt eine perspektivische Ansicht eines Luftausströmers 10. Der Luftausströmer 10 weist zwei Luftleitelemente 14 und ein Luftleitelement 16 mit einem daran befestigten Verstellmittel 18 auf. Die Luftleitelemente 14 weisen einen Diffusor 60 auf, der sich entlang einer Längskante der Luftleitelemente 14 erstreckt und über den die Luftleitelemente 14 beleuchtet werden können bzw. wird Licht über den jeweiligen Diffusor 60 ausgegeben. Bei dem Luftleitelement 16 wird das Verstellmittel 18, wie bereits in Bezug auf die Fig. 1 bis 3 beschrieben, beleuchtet, indem Licht über den Diffusor 62 ausgegeben wird.

Der Luftausströmer 10 weist eine die Luftaustrittsöffnung 28 umgebende Blende 12 auf, die über Haken 104 mit einem Gehäuse 30 (in Fig. 4 nicht dargestellt) verbunden ist. Ferner sind an dem Gehäuse 30 Fächer (Aussparungen) 100 angeordnet, in welchen Platinen mit LEDs aufgenommen sind, um Licht über die Lagerzapfen 32 in die ersten Lichtleiter 38 zum Ausgeben von Licht über den Diffusor 60 bzw. 62 einzubringen.

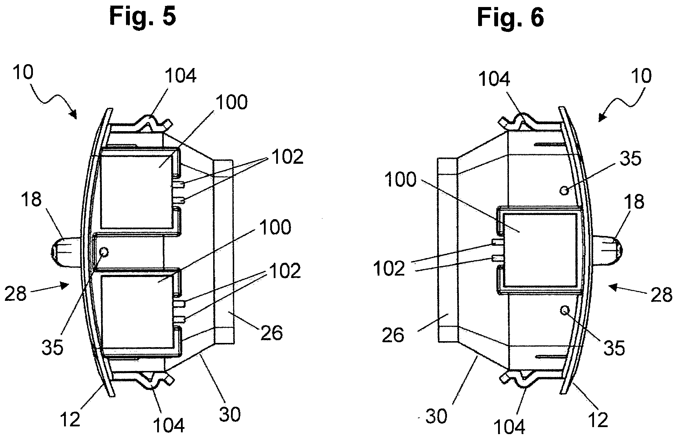

Fig. 5 zeigt eine Seitenansicht eines Luftausströmers 10, wobei hier die Verbindung der Blende 12 an dem Gehäuse 30 dargestellt ist. Ferner ist der Anschluss 26 an einen Luftzuführkanal dargestellt. In der Öffnung 35 ist ein Lagerzapfen 34 aufgenommen, der nicht zum Einbringen von Licht dient. Aus den Fächern 100 verlaufen schematisch angedeutete elektrische Anschlüsse 102, über welche Strom den Platinen mit LEDs zum Einbringen von Licht zugeführt wird.

Fig. 6 zeigt eine weitere Seitenansicht eines Lichtausströmers 10. Die in Fig. 6 dargestellte Ansicht zeigt den Blick auf die gegenüberliegende Seite der Darstellung von Fig. 5.

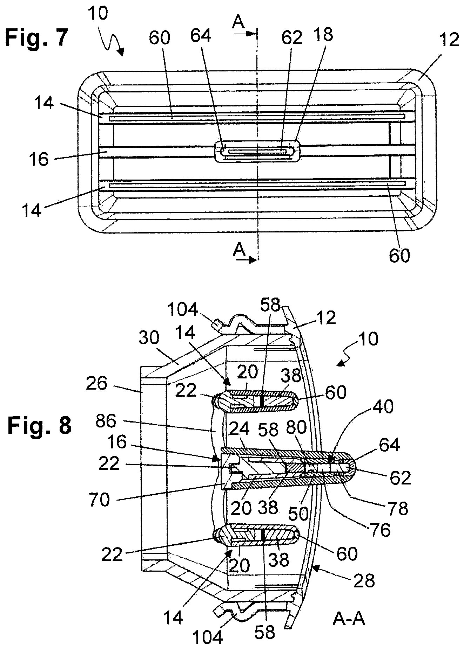

Fig. 7 zeigt eine Draufsicht auf einen Lichtausströmer 10, aufweisend eine Blende 12 sowie Luftleitelemente 14 und 16, wobei das Luftleitelement 16 ein Verstellmittel 18 aufweist.

Fig. 8 zeigt eine Schnittansicht entlang der Linie A-A von Fig. 7. In Fig. 8 ist dargestellt, dass die Luftleitelemente 14 und 16 über eine Koppelstange 86 miteinander verbunden sind. Dadurch ergibt sich bei einem Verschwenken des Luftleitelements 16 über das Feststellelement 18 nach oben oder unten ebenso ein Verschwenken der Luftleitelemente 14. In Fig. 8 ist ferner der Aufbau der Luftleitelemente 14 und 16 dargestellt. Die Oberflächenstruktur 58 des ersten Lichtleiters 38 ist bei den Luftleitelementen 14 beabstandet zu dem zweiten Gehäuseteil 22 angeordnet. Ferner ist die Oberfläche des zweiten Gehäuseteils 22, die der Oberflächenstruktur 58 gegenüberliegt, weiß ausgebildet. Ebenso sind die Bereiche des ersten Gehäuseteils 20, die an dem ersten Lichtleiter 38 anliegen, vorzugsweise weiß ausgebildet. An einer vorderen Kante weisen die Luftleitelemente 14 einen Diffusor 60 auf, über den das Licht ausgegeben wird. Bei dem Luftleitelement 16 liegt an der in Fig. 8 nicht bezeichneten Lichtaustrittsfläche 108 des ersten Lichtaustrittsabschnitts 56 des ersten Lichtleiters 38 das Anschlussteil 80 an, welches die eintreffenden Lichtstrahlen zu der in Fig. 8 nicht dargestellten dreieckförmigen Öffnung 74 führt, wovon aus die Lichtstrahlen zu der ersten Schräge 76 und der zweiten Schräge 78 umgelenkt werden, bis sie über den zweiten Lichtaustrittsabschnitt 82 und den Diffusor 62 ausgegeben werden.

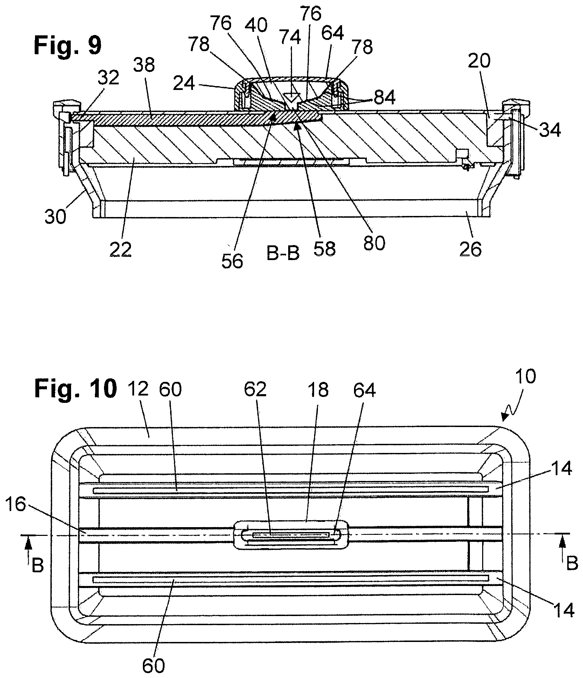

Fig. 9 zeigt eine Schnittansicht entlang der Linie B-B des in Fig. 10 dargestellten Luftausströmers 10. Der in Fig. 10 dargestellte Luftausströmer 10 entspricht dem in Fig. 7 dargestellten Luftausströmer 10.

In Fig. 9 ist dargestellt, wie die Anordnung des ersten Lichtleiters 38 zu dem zweiten Lichtleiter 40 ausgebildet ist. Über den Lagerzapfen 32 eingebrachte Lichtstrahlen werden über die Oberflächenstruktur 58 im Wesentlichen homogen zu der Lichtaustrittsfläche 108 des ersten Lichtaustrittsabschnitts 56 umgelenkt, an der das Anschlussteil 80 über seine Kontaktfläche verschoben werden kann. Die Länge der Lichtaustrittsfläche 108 des ersten Lichtaustrittsabschnitts 56 sowie der Lichteintrittsfläche in dem Anschlussteil 80 korrespondieren derart miteinander, dass bei einer Verschiebung des Verstellmittels 18 stets eine Überdeckung vorhanden ist. Dadurch ist sichergestellt, dass das Verstellmittel 18 in all seinen Stellungen gleich intensiv leuchtet.

Wie aus Fig. 9 ersichtlich, bewirken die Seitenflächen der dreieckförmigen Öffnung 74 eine Umlenkung von einfallenden Lichtstrahlen auf die erste Schräge 76 und die zweite Schräge 78, welche ebenso eine Oberflächenstruktur 84 aufweisen. Über die Oberflächenstruktur 84 an den Seiten mit der ersten Schräge 76 und der zweiten Schräge 78 werden die Lichtstrahlen nach oben in Richtung zu dem zweiten Lichtaustrittsabschnitt 82 gelenkt. Ein derartig ausgebildeter zweiter Lichtleiter 40 ermöglicht es, über die gesamte Breite und Höhe des zweiten Lichtaustrittsabschnitts 82 eine gleichmäßige Beleuchtung bereitzustellen. Die dreieckige Öffnung 74 verhindert auch einen Hotspot, der ohne die dreieckige Öffnung 74 in der Mitte des zweiten Lichtaustrittsabschnitts 82 entstehen würde.

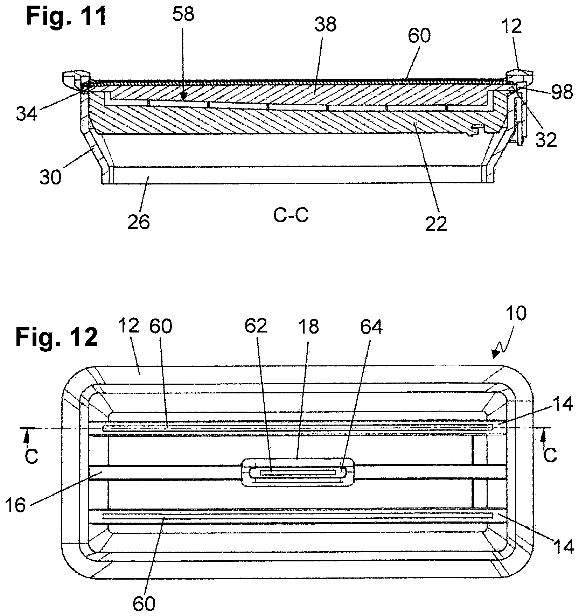

Fig. 11 zeigt eine Schnittansicht entlang der Linie C-C von Fig. 12, wobei Fig. 12 eine Draufsicht auf einen Luftausströmer 10 zeigt. Der in Fig. 12 dargestellte Luftausströmer 10 entspricht dem in Fig. 10 dargestellten Luftausströmer 10 sowie dem in Fig. 7 dargestellten Luftausströmer 10.

Fig. 11 zeigt eine Schnittansicht eines Luftleitelements 14, welches kein Verstellmittel 18 aufweist. Hierbei wird im Wesentlichen die gesamte Breite des Luftleitelements 14 über den Diffusor 60 beleuchtet. Zur "Lichtmischung" müssen jedoch links und rechts kurze Bereiche vorhanden sein, die nicht durchleuchtet werden, da ansonsten in diesen Bereichen die Gefahr von "Hotspots" entsteht. Dazu weist der erste Lichtleiter 38 über die gesamte Breite, welche beleuchtet werden soll, eine Oberflächenstruktur. 58 auf. Ferner ist der erste Lichtleiter 38 so ausgebildet, dass dessen Breite ausgehend von der dem Lagerzapfen 32 zugewandten Seite hin zu der dem Lagerzapfen 34 zugewandten Seite hin abnimmt. An dem Lagerzapfen 32 wird über eine LED 98 Licht in den ersten Lichtleiter 38 eingebracht und über die spezielle Oberflächenstruktur 58 so reflektiert, dass eine gleichmäßige Beleuchtung des Diffusors 60 über dessen Länge und Breite hin erfolgt. Bei sehr langen Luftleitelementen (bspw. Lamellen), die nicht von einer Seite beleuchtet werden können, kann es nötig sein, beim Lichtleiter 38 zusätzlich auf der gegenüberliegenden Seite Licht über den Lagerzapfen 32 einzukoppeln. In diesem Fall ist der Lichtleiter dann symmetrisch ausgeführt.

Die Oberflächenstrukturen 58 und 84 können durch wellenförmige oder dreieckförmige Verläufe bzw. Strukturen dieser Oberflächen erreicht werden. Dadurch werden einfallende bzw. auf diese Oberflächen auftreffende Lichtstrahlen entsprechend ihrer Struktur (Dreieck, Welle, etc.) reflektiert, so dass eine bestimmte Reflexion erreicht werden kann.

**Bezugszeichenliste**

| | | | |
|---|---|---|---|
| 10 | Luftausströmer | 74 | dreieckige Öffnung |
| 12 | Blende | 76 | erste Schräge |
| 14 | Luftleitelement | 78 | zweite Schräge |
| 16 | Luftleitelement | 80 | Anschlussteil |
| 18 | Verstellmittel | 82 | zweiter Lichtaustrittsabschnitt |
| 20 | erstes Gehäuseteil | | |
| 22 | zweites Gehäuseteil | 84 | Oberflächenstruktur |
| 24 | Verstellmittelgehäuse | 86 | Koppelstange |
| 26 | Anschluss | 88 | Lagerteil |
| 28 | Luftaustrittsöffnung | 90 | Lagerteil |
| 30 | Gehäuse | 92 | Lagervorsprung |
| 32 | Lagerzapfen | 94 | Lagervorsprung |
| 34 | Lagerzapfen | 96 | Leiste |
| 35 | Öffnung | 98 | LED |
| 36 | Gehäuseteil | 100 | Fach |
| 38 | erster Lichtleiter | 102 | Anschluss |
| 40 | zweiter Lichtleiter | 104 | Haken |
| 42 | Leiste | 106 | Längskante |
| 44 | Öffnung | 108 | Lichtaustrittsfläche |
| 46 | Öffnung | 110 | Leiste |
| 48 | längliche Öffnung | 112 | Oberfläche |
| 50 | Halteteil | | |
| 52 | Aufnahme | | |
| 54 | Vorsprung | | |
| 56 | erster Lichtaustrittsabschnitt | | |
| 58 | Oberflächenstruktur | | |
| 60 | Diffusor | | |
| 62 | Diffusor | | |
| 64 | Aufnahme | | |
| 66 | Haken | | |
| 68 | längliche Öffnung | | |
| 70 | Teil | | |
| 72 | Vorsprung | | |
| 73 | Öffnung | | |

## Patentansprüche

1. Luftleitelement (14, 16) für einen Luftausströmer (10), der ein Gehäuse (30), eine Luftaustrittsöffnung (28) und einen Anschluss (26) an einen Luftzuführschacht aufweist, wobei das Luftleitelement (14, 16) über mindestens einen Lagerzapfen (32, 34) in dem Gehäuse (30) verschwenkbar gelagert ist und einen aus durchleuchtbarem Kunststoff bestehenden ersten Lichtleiter (38) aufweist, der einen in dem Gehäuse (30) des Luftausströmers (10) verschwenkbar gelagerten Lagerzapfen (32) aufweist oder mit einem Zapfen den Lagerzapfen (32) durchsetzt und in dem Gehäuse (30) an dem Lagerzapfen (32) ein Leuchtmittel zum Einbringen von Licht in den ersten Lichtleiter (38) angeordnet ist und der erste Lichtleiter (38) sich über mindestens einen Längsbereich des Luftleitelements (14; 16) erstreckt, und wobei über das Leuchtmittel eingebrachtes Licht über eine Lichtaustrittsfläche (108) eines parallel zu einer vorderen, der Luftaustrittsöffnung (28) zugewandten Längskante (106) des Luftleitelements (14; 16) verlaufenden ersten Lichtaustrittsabschnitts (56) ausgebbar ist und der erste Lichtleiter (38) an der der Lichtaustrittsfläche (108) des ersten Lichtaustrittsabschnitts (56) gegenüberliegenden Seite eine Oberflächenstruktur (58) aufweist, die eine Reflexion des eingebrachten Lichts bewirkt und so ausgebildet ist, dass über das Leuchtmittel in den ersten Lichtleiter (38) eingebrachtes Licht gleichmäßig über die Lichtaustrittsfläche (108) des ersten Lichtaustrittsabschnitts (56) ausgegeben wird, wobei sich die Oberflächenstruktur (58) mindestens über den Bereich der Lichtaustrittsfläche (108) des ersten Lichtaustrittsabschnitts (56) erstreckt, **dadurch gekennzeichnet, dass** vor der Lichtaustrittsfläche (108) des ersten Lichtaustrittsabschnitts (56) ein Diffusor (60) angeordnet ist und der erste Lichtleiter (38) und der Diffusor (60) von mindestens einem ersten Gehäuseteil (20) für das Luftleitelement (14) umgeben sind und das mindestens eine erste Gehäuseteil (20) mindestens eine längliche Öffnung (48) aufweist, die mindestens einen Teil des Diffusors (60) von außen freigibt.

2. Luftleitelement (14, 16) für einen Luftausströmer (10), der ein Gehäuse (30), eine Luftaustrittsöffnung (28) und einen Anschluss (26) an einen Luftzuführschacht aufweist, wobei das Luftleitelement (14, 16) über mindestens einen Lagerzapfen (32, 34) in dem Gehäuse (30) verschwenkbar gelagert ist und einen aus durchleuchtbarem Kunststoff bestehenden ersten Lichtleiter (38) aufweist, der einen in dem Gehäuse (30) des Luftausströmers (10) verschwenkbar gelagerten Lagerzapfen (32) aufweist oder mit einem Zapfen den Lagerzapfen (32) durchsetzt und in dem Gehäuse (30) an dem Lagerzapfen (32) ein Leuchtmittel zum Einbringen von Licht in den ersten Lichtleiter (38) angeordnet ist und der erste Lichtleiter (38) sich über mindestens einen Längsbereich des Luftleitelements (14; 16) erstreckt, und wobei über das Leuchtmittel eingebrachtes Licht über eine Lichtaustrittsfläche (108) eines parallel zu einer vorderen, der Luftaustrittsöffnung (28) zugewandten Längskante (106) des Luftleitelements (14; 16) verlaufenden ersten Lichtaustrittsabschnitts (56) ausgebbar ist und der erste Lichtleiter (38) an der der Lichtaustrittsfläche (108) des ersten Lichtaustrittsabschnitts (56) gegenüberliegenden Seite eine Oberflächenstruktur (58) aufweist, die eine Reflexion des eingebrachten Lichts bewirkt und so ausgebildet ist, dass über das Leuchtmittel in den ersten Lichtleiter (38) eingebrachtes Licht gleichmäßig über die Lichtaustrittsfläche (108) des ersten Lichtaustrittsabschnitts (56) ausgegeben wird, wobei sich die Oberflächenstruktur (58) mindestens über den Bereich der Lichtaustrittsfläche (108) des ersten Lichtaustrittsabschnitts (56) erstreckt, wobei das Luftleitelement (16) ein mindestens abschnittweise entlang des Luftleitelements (16) verschiebbares Verstellmittel (18) aufweist das mindestens eine erste Gehäuseteil (20) des Luftleitelements (16) im Verschiebebereich des Verstellmittels (18) eine längliche Öffnung (48) aufweist und die Lichtaustrittsfläche (108) des ersten Lichtaustrittsabschnitts (56) des ersten Lichtleiters (38) sich im Wesentlichen über die Länge und Breite der länglichen Öffnung (48) erstreckt wobei das Verstellmittel (18) ein Verstellmittelgehäuse (24) aufweist, in dem ein zweiter Lichtleiter (40) aus einem durchleuchtbaren Kunststoff angeordnet ist, der ein Anschlussteil (80) mit einer glatten Kontaktfläche aufweist, die an der Lichtaustrittsfläche (108) des ersten Lichtaustrittsabschnitts (56) des ersten Lichtleiters (38) anliegt und die Kontaktfläche über das Verstellmittel (18) entlang des ersten Lichtaustrittsabschnitts (56) verschiebbar ist, **dadurch gekennzeichnet, dass** der zweite Lichtleiter (40) innerhalb des Verstellmittelgehäuses (24) von einem Halteteil (50) gehalten ist und wobei der zweite Lichtleiter (40) mindestens an einer oberen und/oder unteren Oberfläche Vorsprünge (54) aufweist, welche in entsprechende Aufnahmen (52) des Halteteils (50) greifen, wobei die Vorsprünge (54) in den Übergängen zu dem zweiten Lichtleiter (40) Radien aufweisen.

3. Luftleitelement nach Anspruch 1 oder 2, **dadurch gekennzeichnet, dass** der erste Lichtleiter (38) im Bereich der Oberflächenstruktur (58) eine abnehmende Breite aufweist.

4. Luftleitelement nach Anspruch 1, **dadurch gekennzeichnet, dass** die Lichtaustrittsfläche (108) des ersten Lichtaustrittsabschnitts (56) eine glatte Oberfläche und die Oberfläche einen rechteckigen Querschnitt aufweist, wobei der Diffusor (60) eine glatte, an der Lichtaustrittsfläche (108) des ersten Lichtaustrittsabschnitts (56) anliegende Oberfläche aufweist.

5. Luftleitelement nach Anspruch 1 oder 3, **dadurch gekennzeichnet, dass** der erste Lichtleiter (38) beabstandet zu dem mindestens einen ersten Gehäuseteil (20) des Luftleitelements (14; 16) angeordnet ist.

6. Luftleitelement nach einem der Ansprüche 1 oder 5, **dadurch gekennzeichnet, dass** der Diffusor (60) aus Kunststoff besteht und an dem ersten Gehäuseteil (20) angespritzt ist.

7. Luftleitelement nach Anspruch 2, **dadurch gekennzeichnet, dass** der zweite Lichtleiter (40) ausgehend von dem Anschlussteil (80) zu beiden Seiten jeweils eine erste Schräge (76) aufweist und die erste Schräge (76) in einen im Wesentlichen rechtwinklig zur Kontaktfläche verlaufenden Abschnitt oder in einen Abschnitt mit einer zweiten Schräge (78) übergeht, wobei die rechtwinklig zur Kontaktfläche verlaufenden Abschnitte oder die Abschnitte mit der zweiten Schräge (78) in einen vorderen zweiten Lichtaustrittsabschnitt (82) übergehen.

8. Luftleitelement nach Anspruch 7, **dadurch gekennzeichnet, dass** der zweite Lichtaustrittsabschnitt (82) im Wesentlichen parallel zur Kontaktfläche verläuft oder eine konvexe Krümmung aufweist und die Kontaktfläche einen im Wesentlichen rechteckigen Querschnitt aufweist.

9. Luftleitelement nach einem der Ansprüche 2, 7 oder 8 **dadurch gekennzeichnet, dass** der zweite Lichtleiter (40) eine im Wesentlichen dreieckige Öffnung (74) aufweist, deren Basis parallel und beabstandet zu der Kontaktfläche verläuft und die dreieckige Öffnung (74) im Wesentlichen ein gleichschenkliges Dreieck bildet.

10. Luftleitelement nach einem der Ansprüche 7 oder 9, **dadurch gekennzeichnet, dass** die erste und/oder die zweite Schräge (76; 78) eine Oberflächenstruktur (84) aufweisen, die eine Reflexion des über das Anschlussteil (80) eingebrachten Lichts bewirken und so ausgebildet sind, dass das in den zweiten Lichtleiter (40) eingebrachte Licht im Wesentlichen gleichmäßig über den zweiten Lichtaustrittsabschnitt (82) ausgegeben wird.

11. Luftleitelement nach einem der Ansprüche 1 bis 10, **dadurch gekennzeichnet, dass** die Oberflächenstruktur (58) des ersten Lichtleiters (38) und/oder die Oberflächenstruktur (84) des zweiten Lichtleiters (40) aus einer Vielzahl von Dreiecken bestehen.

12. Luftleitelement nach einem der Ansprüche 1 bis 10, **dadurch gekennzeichnet, dass** die Oberflächenstruktur (58) des ersten Lichtleiters (38) und/oder die Oberflächenstruktur (84) des zweiten Lichtleiters (40) durch dreieckige Verläufe oder durch wellenförmige Verläufe gebildet sind.

13. Luftleitelement nach einem der Ansprüche 7 bis 12, **dadurch gekennzeichnet, dass** an dem zweiten Lichtaustrittsabschnitt (82) ein Diffusor (62) angeordnet ist, der in dem Verstellmittelgehäuse (24) angeordnet ist und das Verstellmittelgehäuse (24) mindestens eine längliche Öffnung (68) aufweist, die mindestens einen Teil des Diffusors (62) von außen freigibt.

14. Luftleitelement nach einem der Ansprüche 1 bis 13, **dadurch gekennzeichnet, dass** das mindestens eine erste Gehäuseteil des Luftleitelements (14; 16) ein hohles Gehäuseteil (36) mit seitlichen Öffnungen (44, 46) ist und wobei an der vorderen, der Luftaustrittsöffnung (28) zugewandten Längskante (106) des Luftleitelements (14; 16) mindestens eine längliche Öffnung (48) verläuft.

15. Luftleitelement nach einem der Ansprüche 1 bis 14, **dadurch gekennzeichnet, dass** ein zweites Gehäuseteil (22) mit dem mindestens einen ersten Gehäuseteil (20) verbunden ist, wobei das mindestens eine erste Gehäuseteil (20) und das zweite Gehäuseteil (22) mindestens an den Bereichen, welche an dem ersten Lichtleiter (38) anliegen oder dem ersten Lichtleiter (38) zugewandt sind, eine weiße Oberfläche oder ein weißes Reflektorteil aufweisen.

16. Luftleitelement nach einem der Ansprüche 2 bis 15, **dadurch gekennzeichnet, dass** das Verstellmittelgehäuse (24) und/oder das Halteteil (50) mindestens an den Bereichen, welche an dem zweiten Lichtleiter (40) anliegen oder dem zweiten Lichtleiter (40) zugewandt sind, eine weiße Oberfläche oder ein weißes Reflektorteil aufweisen.

17. Luftleitelement nach einem der Ansprüche 1 bis 16, **dadurch gekennzeichnet, dass** der erste Lichtleiter (38) und/oder der zweite Lichtleiter (40) aus Polycarbonat (PC) oder Polymethylmethacrylat (PMMA) bestehen.

18. Luftleitelement nach einem der Ansprüche 1 bis 17, **dadurch gekennzeichnet, dass** das mindestens eine erste Gehäuseteil (20; 36) und/oder das zweite Gehäuseteil (22) aus einem glasfaserverstärkten Kunststoff bestehen, wobei der glasfaserverstärkte Kunststoff Polyamid 6 mit einem 50%-igen Glasfaseranteil (PA 6 GF50) ist.

19. Luftleitelement nach einem der Ansprüche 1 bis 18, **dadurch gekennzeichnet, dass** der Diffusor (60) des ersten Lichtleiters (38) und/oder der Diffusor (62) des zweiten Lichtleiters (40) aus Polycarbonat (PC) oder Polymethylmethacrylat (PMMA) bestehen und das mindestens eine erste Gehäuseteil (20) und das zweite Gehäuseteil (22) miteinander verklebt, über eine Steckverbindung oder durch Laserschweißen miteinander verbunden sind.

20. Luftleitelement nach einem der Ansprüche 1 bis 19, **dadurch gekennzeichnet, dass** der erste Diffusor (60) und/oder der zweite Diffusor (62) mit einer Lackierung überzogen sind und mindestens partiell einen Lichtaustrittsbereich durch Freilegung mittels Laser aufweisen.

21. Luftleitelement nach Anspruch 1 oder 2, **dadurch gekennzeichnet, dass** das Leuchtmittel eine lichtemittierende, ein- oder mehrfarbige Leuchtdiode (98) ist.

## Claims

1. Air conduit element (14, 16) for an air vent (10) consisting of a housing (30), an air outlet (28) and an connection (26) to an air supply duct, in which the air conduit element (14, 16) is swivel-mounted by at least one bearing pin (32, 34) in the housing (30) and including a first optical conductor (38) consisting of translucent plastic which consists of a swivel-mounted bearing pin (32) in the housing (30) of the air vent (10) or permeates the bearing pin (32) with a pin and an illuminant is arranged in the housing (30) on the bearing pin (32) to couple light into the first optical conductor (38) and the first optical conductor (38) extends over a longitudinal region of the air conduit element (14; 16), in which the light from the illuminant coupled into is displayable by a light discharge surface (108) of a first light discharge section (56) in parallel with a facing the air outlet (28) front longitudinal edge (106) of the air conduit element (14, 16) and the first optical conductor (38) has a surface structure (58) at the opposite side of the light discharge surface (108) of the first light discharge section (56) which effects a reflection of the light coupled into and is designed in such a way that the light from the illuminant coupled into the first optical conductor (38) is evenly emitted by the light discharge surface (108), wherein the surface structure (58) extends over at least the area of the light discharge surface (108) of the first light discharge section (56), **characterized in that** a diffusor (60) is arranged in front of the first light discharge section's (56) light discharge surface (108) and the first optical conductor (38) and the diffusor (60) is surrounded by at least one first housing element (20) for the air conduit element (14) and the at least one first housing element (20) has at least one elongated opening (48) which uncovers at least one part of the diffusor (60) from outside.

2. Air conduit element (14, 16) for an air vent (10) consisting of a housing (30), an air outlet (28) and an connection (26) to an air supply duct, in which the air conduit element (14, 16) is swivel-mounted by at least one bearing pin (32, 34) in the housing (30) and including a first optical conductor (38) consisting of translucent plastic which consists of a swivel-mounted bearing pin (32) in the housing (30) of the air vent (10) or permeates the bearing pin (32) with a pin and an illuminant is arranged in the housing (30) on the bearing pin (32) to couple light into the first optical conductor (38) and the first optical conductor (38) extends over a longitudinal region of the air conduit element (14; 16), in which the light from the illuminant coupled into is displayable by a light discharge surface (108) of a first light discharge section (56) in parallel with a facing the air outlet (28) front longitudinal edge (106) of the air conduit element (14, 16) and the first optical conductor (38) has a surface structure (58) at the opposite side of the light discharge surface (108) of the first light discharge section (56) which effects a reflection of the light coupled into and is designed in such a way that the light from the illuminant coupled into the first optical conductor (38) is evenly emitted by the light discharge surface (108), wherein the surface structure (58) extends over at least the area of the light discharge surface (108) of the first light discharge section (56), wherein the air conduit element (16) has one at least section by section along the air conduit element (16) slidable adjustment tool (18), the at least one air conduit element's (16) first housing element (20) has an elongated opening (48) in the sliding area of the adjustment tool (18) and the light discharge surface (108) of the first light discharge section (56) of the first optical conductor (38) extends basically over the elongated opening's (48) length and width, wherein the adjustment tool (18) has an adjustment tool housing (24) in which a second optical conductor (40) made of translucent plastic is arranged, that has a connection element (80) with a smooth contact surface, which is in contact with the light discharge surface (108) of the first optical conductor's (38) first light discharge section (56) and the contact surface is slidable by the adjustment tool (18) along the first light discharge section (56), **characterized in that** the second optical conductor (40) is hold inside the adjustment tool housing (24) by a sleeve (50) and whereby the second optical conductor (40) has protrusions (54) at least at an upper and/or bottom surface, which interlocks into the fitting grooves (52) of the sleeve (50), wherein the protrusions (54) have radii in the transitions to the second optical conductor (40).

3. Air conduit element according to claim 1 or 2, **characterized in that** the first optical conductor (38) has a decreasing width in the area of the surface structure (58).

4. Air conduit element according to claim 1, **characterized in that** the light discharge surface (108) of the first light discharge section (56) has a smooth surface and the surface has a rectangular cross section, wherein the diffusor (60) has a smooth surface being in contact with the first light discharge section's (56) light discharge surface (108).

5. Air conduit element according to claim 1 or 3, **characterized in that** the first optical conductor (38) is arranged in distance to the at least one first housing element (20) of the air conduit element (14; 16).

6. Air conduit element according to any one of the preceding claims 1 or 5, **characterized in that** the diffusor (60) is made of plastic and is injection molded at the first housing element (20).

7. Air conduit element according to claim 2, **characterized in that** the second optical conductor (40) has at both sides going out from the connection element (80) a first bevel (76) each and the first bevel (76) turns to a section passing basically perpendicular to the contact surface or to a section with a second bevel (78), wherein the sections passing perpendicular to the contact surface or the sections with the second bevel (78) merge into a front second light discharge section (82).

8. Air conduit element according to claim 7, **characterized in that** the second light discharge section (82) pass basically perpendicular to the contact surface or has a convex curvature and the contact surface has a basically rectangular cross section.

9. Air conduit element according to any one of the preceding claims 2, 7 or 8, **characterized in that** the second optical conductor (40) has a basically triangular opening (74), which base pass parallel and distanced to the contact surface and the triangular opening (74) forms basically an isosceles triangle.

10. Air conduit element according to any one of the preceding claims 7 or 9, **characterized in that** the first and/or second bevel (76; 78) have a surface structure (84), which effect a reflection of the light coupled into by the connection element (80) and is designed in such a way that the light coupled into the second optical conductor (40) is basically evenly emitted by the second light discharge section (82).

11. Air conduit element according to any one of the preceding claims 1 to 10, **characterized in that** the first optical conductor's (38) surface structure (58) and/or the surface structure (84) of the second optical conductor (40) consists of a large number of triangles.

12. Air conduit element according to any one of the preceding claims 1 to 10, **characterized in that** the surface structure (58) of the first optical conductor (38) and/or the surface structure (84) of the second optical conductor (40) are formed by triangular or undulating courses.

13. Air conduit element according to any one of the preceding claims 7 or 12, **characterized in that** a diffusor (62) is arranged at the second light discharge section (82), which is arranged in the adjustment tool housing (24) and the adjustment tool housing (24) has at least one elongated opening (68), which uncovers at least one part of the diffusor (62) from outside.

14. Air conduit element according to any one of the preceding claims 1 to 13, **characterized in that** at least one first housing element of the air conduit element (14; 16) is a hollow housing element (36) with lateral openings (44, 46), whereby at least one elongated opening (48) pass at the front longitudinal edge (106) of the air conduit element (14; 16) facing the air outlet (28).

15. Air conduit element according to any one of the preceding claims 1 to 14, **characterized in that** a second housing element (22) is connected with the at least one first housing element (20), whereby the at least one first housing element (20) and the second housing element (22) have a white surface or a white reflector element at least at the sections being in contact with the first optical conductor (38) or facing to the first optical conductor (38).

16. Air conduit element according to any one of the preceding claims 2 to 15, **characterized in that** the adjustment tool housing (24) and/or the sleeve (50) have a white surface or a white reflector element at least at the sections being in contact with the second optical conductor (40) or facing to the second optical conductor (40).

17. Air conduit element according to any one of the preceding claims 1 to 16, **characterized in that** the first optical conductor (38) and/or the second optical conductor (40) is made of polycarbonate (PC) or polymethylmethacrylate (PMMA).

18. Air conduit element according to any one of the preceding claims 1 to 17, **characterized in that** the at least one first housing element (20; 36) and/or the second housing element (22) is made of a fiber-reinforced plastic, whereby the fiber-reinforced plastic is polyamide 6 with a 50% share of glass fiber (PA 6 GF50).

19. Air conduit element according to any one of the preceding claims 1 to 18, **characterized in that** the diffusor (60) of the first optical conductor (38) and/or the diffusor (62) of the second optical conductor (40) is made of polycarbonate (PC) or polymethylmethacrylate (PMMA) and the at least one first housing element (20) and the second housing element (22) are glued together or connected to each other by a plug-in connection or laser welding.

20. Air conduit element according to any one of the preceding claims 1 to 19, **characterized in that** the first diffusor (60) and/or the second diffusor (62) are covered with a paint and have at least partially one light discharge area by laser exposure.

21. Air conduit element according to any one of the preceding claims 1 to 2, **characterized in that** the illuminant is a light-emitting single- or multicolored LED (98).

## Revendications

1. Élément de guidage d'air (14, 16) pour un aérateur (10) qui présente un logement (30), un orifice de sortie d'air (28) et un raccordement (26) sur une buse d'admission d'air, dans lequel l'élément de guidage d'air (14, 16) est logé de façon pivotante dans le logement (30) par dessus au moins un tourillon (32, 34) et présente un premier conduit de lumière (38) constitué d'une matière plastique qui peut être illuminée par transparence, lequel premier conduit de lumière présente un tourillon (32) logé de façon pivotante dans le logement (30) de l'aérateur (10) ou traverse le tourillon (32) avec un tenon et un moyen d'éclairage est agencé dans le logement (30) contre le tourillon (32) pour introduire une lumière dans le premier conduit de lumière (38) et le premier conduit de lumière (38) s'étend par dessus au moins une zone longitudinale de l'élément de guidage d'air (14 ; 16), et dans lequel une lumière introduite par le moyen d'éclairage peut être délivrée par dessus une surface de sortie de lumière (108) d'une première section de sortie de lumière (56) se déroulant en parallèle d'un bord longitudinal (106), en avant et tourné vers l'orifice de sortie d'air (28), de l'élément de guidage d'air (14 ; 16) et le premier conduit de lumière (38) présente une structure superficielle (58) sur le côté opposé de la surface de sortie de lumière (108) de la première section de sortie de lumière (56), laquelle structure superficielle provoque une réflexion de la lumière introduite et est formée de façon telle qu'une lumière introduite par le moyen d'éclairage dans le premier conduit de lumière (38) est délivrée de façon égale par dessus la surface de sortie de lumière (108) de la première section de sortie de lumière (56), dans lequel la structure superficielle (58) s'étend au moins par dessus la zone de la surface de sortie de lumière (108) de la première section de sortie de lumière (56), **caractérisé en ce qu'**un diffuseur (60) est agencé avant la surface de sortie de lumière (108) de la première section de sortie de lumière (56) et le premier conduit de lumière (38) et le diffuseur (60) sont entourés d'au moins une première partie de logement (20) pour l'élément de guidage d'air (14) et la au moins une première partie de logement (20) présente au moins un orifice longitudinal (48) qui libère depuis l'extérieur au moins une partie du diffuseur (60).

2. Élément de guidage d'air (14, 16) pour un aérateur (10) qui présente un logement (30), un orifice de sortie d'air (28) et un raccordement (26) sur une buse d'admission d'air, dans lequel l'élément de guidage d'air (14, 16) est logé de façon pivotante dans le logement (30) par dessus au moins un tourillon (32, 34) et présente un premier conduit de lumière (38) constitué d'une matière plastique qui peut être illuminée par transparence, lequel premier conduit de lumière présente un tourillon (32) logé de façon pivotante dans le logement (30) de l'aérateur (10) ou traverse le tourillon (32) avec un tenon et un moyen d'éclairage est agencé dans le logement (30) contre le tourillon (32) pour introduire une lumière dans le premier conduit de lumière (38) et le premier conduit de lumière (38) s'étend par dessus au moins une zone longitudinale de l'élément de guidage d'air (14 ; 16), et dans lequel une lumière introduite par le moyen d'éclairage peut être délivrée par dessus une surface de sortie de lumière (108) d'une première section de sortie de lumière (56) se déroulant en parallèle d'un bord longitudinal (106), en avant et tourné vers l'orifice de sortie d'air (28), de l'élément de guidage d'air (14 ; 16) et le premier conduit de lumière (38) présente une structure superficielle (58) sur le côté opposé de la surface de sortie de lumière (108) de la première section de sortie de lumière (56), laquelle structure superficielle provoque une réflexion de la lumière introduite et est formée de façon telle qu'une lumière introduite par le moyen d'éclairage dans le premier conduit de lumière (38) est délivrée de façon égale par dessus la surface de sortie de lumière (108) de la première section de sortie de lumière (56), dans lequel la structure superficielle (58) s'étend au moins par dessus la zone de la surface de sortie de lumière (108) de la première section de sortie de lumière (56), **caractérisé en ce que** l'élément de guidage d'air (16) présente au moins par endroits le long de l'élément de guidage d'air (16) un moyen de réglage (18) déplaçable, qu' au moins une première partie de logement (20) de l'élément de guidage d'air (16) dans la zone de déplacement du moyen de réglage (18) présente un orifice longitudinal (48) et la surface de sortie de lumière (108) de la première section de sortie de lumière (56) du premier conduit de lumière (38) s'étend essentiellement sur la longueur et la largeur de l'orifice longitudinal (48) dans lequel le moyen de réglage (18) présente un logement de moyen de réglage (24) dans lequel est agencé un second conduit de lumière (40) dans une matière plastique qui peut être illuminée par transparence, lequel second conduit de lumière présente une partie de raccordement (80) avec une surface de contact lisse qui est attenante à la surface de sortie de lumière (108) de la première section de sortie de lumière (56) du premier conduit de lumière (38) et la surface de contact peut être déplacée par dessus le moyen de réglage (18) le long de la première section de sortie de lumière (56), dans lequel le second conduit de lumière (40) est maintenu à l'intérieur du logement de moyen de réglage (24) par une partie de maintien (50) et dans lequel le second conduit de lumière (40) présente des saillies (54) au moins sur une surface supérieure et/ou inférieure, lesquelles saillies viennent en prise dans des logements (52) correspondants de la partie de maintien (50), dans lequel les saillies (54) présentent des rayons dans les passages vers le second conduit de lumière (40).

3. Élément de guidage d'air selon la revendication 1 ou 2, **caractérisé en ce que** le premier conduit de lumière (38) présente une largeur qui diminue dans la zone de la structure superficielle (58).

4. Élément de guidage d'air selon la revendication 1, **caractérisé en ce que** la surface de sortie de lumière (108) de la première section de sortie de lumière (56) présente une surface lisse et la surface présente une section transversale rectangulaire, dans lequel le diffuseur (60) présente une surface lisse adjacente à la surface de sortie de lumière (108) de la première section de sortie de lumière (56).

5. Élément de guidage d'air selon la revendication 1 ou 3, **caractérisé en ce que** le premier conduit de lumière (38) est agencé à distance de la au moins une première partie de logement (20) de l'élément de guidage d'air (14 ; 16).

6. Élément de guidage d'air selon l'une des revendications 1 ou 5, **caractérisé en ce que** le diffuseur (60) est constitué de matière plastique et est moulé par injection contre la première partie de logement (20).

7. Élément de guidage d'air selon la revendication 2, **caractérisé en ce que** le second conduit de lumière (40) présente en partant de la partie de raccordement (80) vers les deux côtés respectivement une première pente (76) et la première pente (76) passe dans une section se déroulant essentiellement à angle droit par rapport à la surface de contact ou dans une section avec une seconde pente (78), dans lequel les sections se déroulant à angle droit par rapport à la surface de contact ou les sections avec la seconde pente (78) passent dans une seconde section de sortie de lumière (82) en avant.

8. Élément de guidage d'air selon la revendication 7, **caractérisé en ce que** la seconde section de sortie de lumière (82) se déroule essentiellement en parallèle de la surface de contact ou présente une courbure convexe et la surface de contact présente une section transversale essentiellement rectangulaire.

9. Élément de guidage d'air selon l'une des revendications 2, 7 ou 8, **caractérisé en ce que** le second conduit de lumière (40) présente un orifice essentiellement triangulaire (74) dont la base se déroule parallèlement et à distance de la surface de contact et l'orifice triangulaire (74) forme essentiellement un triangle isocèle.

10. Élément de guidage d'air selon l'une des revendications 7 ou 9, **caractérisé en ce que** la première et/ou la seconde pente (76 ; 78) présentent une structure superficielle (84) qui provoque une réflexion de la lumière introduite par dessus la partie de raccordement (80) et sont formées de façon telle que la lumière introduite dans le second conduit de lumière (40) est délivrée de façon essentiellement égale par dessus la seconde section de sortie de lumière (82).

11. Élément de guidage d'air selon l'une des revendications 1 à 10, **caractérisé en ce que** la structure superficielle (58) du premier conduit de lumière (38) et/ou la structure superficielle (84) du second conduit de lumière (40) sont constituées d'une pluralité de triangles.

12. Élément de guidage d'air selon l'une des revendications 1 à 10, **caractérisé en ce que** la structure superficielle (58) du premier conduit de lumière (38) et/ou la structure superficielle (84) du second conduit de lumière (40) prennent la forme de tracés triangulaires ou de tracés ondulatoires.

13. Élément de guidage d'air selon l'une des revendications 7 à 12, **caractérisé en ce qu'**un diffuseur (62) est agencé contre la seconde section de sortie de lumière (82), lequel diffuseur est agencé dans le logement de moyen de réglage (24) et le logement de moyen de réglage (24) présente au moins un orifice longitudinal (68) qui libère depuis l'extérieur au moins une partie du diffuseur (62).

14. Élément de guidage d'air selon l'une des revendications 1 à 13, **caractérisé en ce que** la au moins une première partie de logement de l'élément de guidage d'air (14 ; 16) est une partie de logement creuse (36) avec des orifices latéraux (44, 46) et dans lequel au moins un orifice longitudinal (48) se déroule contre le bord longitudinal (106), en avant et tourné vers l'orifice de sortie d'air (28), de l'élément de guidage d'air (14 ; 16).

15. Élément de guidage d'air selon l'une des revendications 1 à 14, **caractérisé en ce qu'**une seconde partie de logement (22) est reliée à la au moins une première partie de logement (20), dans lequel la au moins une première partie de logement (20) et la seconde partie de logement (22) présentent, au moins contre les zones qui sont attenantes au premier conduit de lumière (38) ou tournées vers le premier conduit de lumière (38), une surface blanche ou une partie de réflecteur blanche.

16. Élément de guidage d'air selon l'une des revendications 2 à 15, **caractérisé en ce que** le logement de moyen de réglage (24) et/ou la partie de maintien (50) présentent, au moins dans les zones qui sont attenantes au second conduit de lumière (40) ou tournées vers le second conduit de lumière (40), une surface blanche ou une partie de réflecteur blanche.

17. Élément de guidage d'air selon l'une des revendications 1 à 16, **caractérisé en ce que** le premier conduit de lumière (38) et/ou le second conduit de lumière (40) sont constitués de polycarbonate (PC) ou de polyméthacrylate de méthyle (PMMA).

18. Élément de guidage d'air selon l'une des revendications 1 à 17, **caractérisé en ce que** la au moins une première partie de logement (20 ; 36) et/ou la seconde partie de logement (22) sont constituées d'une matière plastique renforcée de fibres de verre, dans lequel la matière plastique renforcée de fibres de verre est un polyamide 6 avec une proportion de fibres de verre de 50 % (PA6-GF50).

19. Élément de guidage d'air selon l'une des revendications 1 à 18, **caractérisé en ce que** le diffuseur (60) du premier conduit de lumière (38) et/ou le diffuseur (62) du second conduit de lumière (40) sont constitués de polycarbonate (PC) ou de polyméthacrylate de méthyle (PMMA) et la au moins une première partie de logement (20) et la seconde partie de logement (22) sont collées l'une à l'autre par une liaison par enfichage ou par soudage au laser.

20. Élément de guidage d'air selon l'une des revendications 1 à 19, **caractérisé en ce que** le premier diffuseur (60) et/ou le second diffuseur (62) sont revêtus d'un laquage et présentent au moins partiellement une zone de sortie de lumière par dégagement au moyen d'un laser.

21. Élément de guidage d'air selon la revendication 1 ou 2, **caractérisé en ce que** le moyen d'éclairage est une diode luminescente (98) émettant une lumière, d'une ou plusieurs couleurs.
